# EUROPEAN PATENT APPLICATION

(11) **EP 4 830 894 A1**
(43) Date of publication of application: **28.10.2026**
(21) Application number: 25214856.4
(22) Date of filing: 11.11.2025
(51) Int. Cl.: B29B 17/04, B29B 17/00, B29K 105/06

(54) **COMPOSITE RECYCLING**

(30) Priority: 26.11.2024 GB 202417314
(71) Applicant: Airbus Operations Limited, Bristol BS34 7PA (GB)
(72) Inventor: AL-TAYAWE, Mohammed, Bristol, BS34 7PA (GB)
(74) Representative: Pilcher, Adam

(57) **Abstract**

Disclosed is a method of processing a piece of composite material for recycling, and using that processed composite material to form a new composite part. The composite material is scored in order to weaken the material and make it more pliable, this scoring creating a series of substantially parallel notches and ridges which may be complementary in size to permit interlocking. The composite material is cut in a different direction to the scoring to form strips suitable for recycling. The strips may be recycled into a new composite part by pressing them in a mould with a resin.

## Description

### FIELD OF THE INVENTION

The present invention relates to a method of recycling composite material, processed composite material for re-use, and to an object formed of recycled composite material.

### BACKGROUND OF THE INVENTION

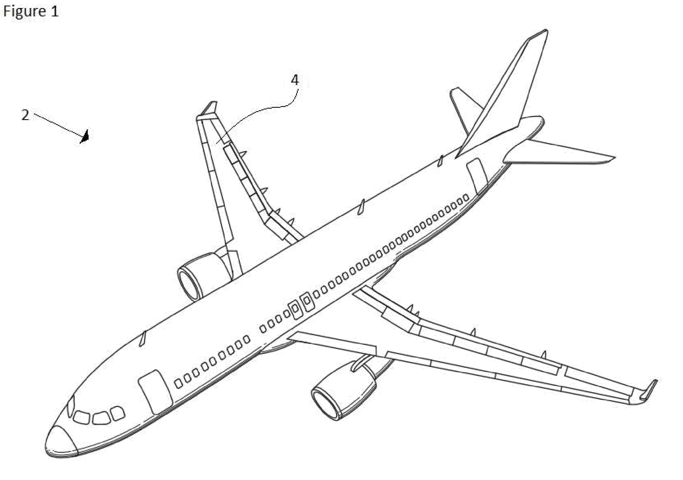

With reference to Figure 1, an aircraft 2 is shown with wings 4. Modern aircraft 2 are increasingly made of composite materials such as Carbon Fibre Reinforced Plastic (CFRP). In general, composite materials comprise a reinforcement embedded in a matrix - in the case of CFRP this may be carbon fibres in a plastic resin. CFRP has a number of properties that make it particularly suitable for use in aircraft, particularly aircraft wings. Such properties include the strength and stiffness of the material, which combined with its relatively low density results in significantly lighter aircraft parts.

One challenge associated with the use of composite materials such as CFRP is industrial waste. Whereas metals previously used for such structures are easy to recycle, composite materials are much more challenging to recycle, since they comprise chemically different materials bonded together. One approach that has been used is the chemical removal of the matrix material by processes such as pyrolysis to enable the bare fibres to be re-used, but this is an intensive process suitable mainly for use on larger panels of material and can result in damage to the fibres. Offcuts of material and other waste such as damaged parts can often therefore end up in landfill.

The present invention seeks to mitigate the above-mentioned problems by providing at least an alternative way to process composite material to make it suitable for re-use.

### SUMMARY OF THE INVENTION

A first aspect of the disclosure provides a method of processing a piece of composite material for recycling, the composite material comprising a reinforcement and a matrix, the method comprising: scoring a first face of the material in a first direction to create a series of substantially parallel notches and ridges in the first face of the material, such that it is weakened and easier to bend; and cutting the material in a second direction such that strips of weakened composite material are formed.

Preferably, the first direction is substantially perpendicular to the second direction.

Preferably, the step of scoring the material further comprises scoring a second face of the material in the first direction.

Preferably, the notches formed by the step of scoring the material have a width that is larger than ridges formed by the same step.

Preferably, the first direction is substantially perpendicular to the direction of the majority of fibres in the composite material.

Optionally, the first direction is substantially aligned with the longest direction of the piece of composite material.

Preferably, the method further comprises a step of cutting the strips to form shorter strips.

Preferably, the strips are cut such that they are approximately 3mm long in the second direction and 1mm wide.

Advantageously, the method may further comprise a step of using the strips of composite material to make a new composite part.

According to a second aspect of the present disclosure, the step of using the strips of composite material comprises: providing a mould; placing the strips of composite material into the mould; providing a resin; adding the resin to the mould; compressing the resin and strips of composite material in the mould; and curing the resin so as to form the new composite part.

Optionally, the resin is provided by the matrix of the strips of composite material; the method further comprises heating the strips of composite material to melt the resin; and the step of curing the resin comprises allowing the resin to cool. This is a suitable method for use with composite material having a thermoplastic resin and a sufficiently high resin content.

Optionally, the method further comprises the steps of: providing reinforcing fibres; and placing the reinforcing fibres in the mould prior to curing the resin.

A third aspect of the present disclosure provides a composite part, comprising a matrix and a reinforcement, wherein at least a portion of the reinforcement comprises strips of weakened composite material obtained by any method according to the first aspect.

A fourth aspect of the present disclosure provides a recycled composite part obtained by any one of the methods of the second aspect of the disclosure.

It will of course be appreciated that features described in relation to one aspect of the present invention may be incorporated into other aspects of the present invention. For example, the method of the invention may incorporate any of the features described with reference to the apparatus of the invention and vice versa.

### BRIEF DESCRIPTION OF THE DRAWINGS

Embodiments of the invention will now be described, by way of example only, with reference to the accompanying drawings, in which:
Figure 1 shows a schematic view of an aircraft;
Figure 2a shows a piece of composite material to be recycled;.
Figure 2b shows the piece of composite material having been scored;
Figure 2c shows a cross section of the scored composite material along the line A-A;
Figure 2d shows the piece of composite material having been cut;
Figure 2e shows the resulting strips of weakened composite material; and
Figure 3 shows the use of a mould to form the strips of composite material into a new composite part.

### DETAILED DESCRIPTION OF EMBODIMENT(S)

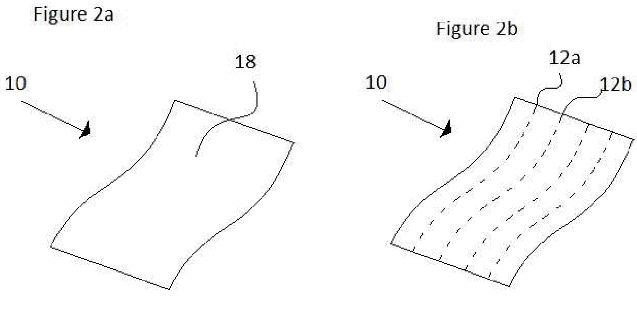

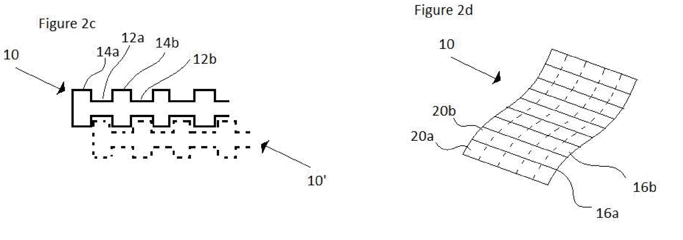

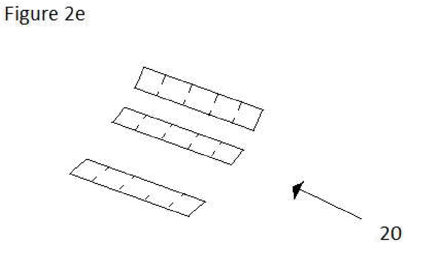

This disclosure relates to a way to process or recycle composite materials. With reference to Figure 2, a piece of composite material 10 is shown. This might be, for example, an off-cut from a part that was cut before curing or machined (or otherwise processed) after curing. Alternatively, it might be a different kind of waste part, for example a part that has been damaged, or one that has been cut down to an inappropriate size or moulded in an incorrect shape.

The composite material 10 comprises a reinforcement of fibres, for example carbon fibres, in a matrix of a plastic material. Different composite materials may have been made for different purposes and have different arrangements of fibres and types of plastic material. For example, the fibres may have been dry fibres, all aligned to maximise the strength of the part in a particular direction, infused with a liquid resin and then cured to form the composite material 10. Alternatively, the fibres may have been part of a woven fabric pre-impregnated with a resin that was then cured. The plastic may be a thermoplastic, or thermoset such as epoxy. Many other forms of composite material 10 are also known and may be suitable for use with the processes described in this disclosure.

The composite material 10 may be a substantially flat sheet, that is to say have one dimension which is substantially smaller than the other dimensions, with the fibres being substantially perpendicular to the shortest dimension. This is the most common form of composite material waste. However in some cases the fibres may be oriented in multiple directions, either by the combination of differently oriented groups of fibres, or a material comprising strands oriented randomly. Accordingly, the composite material 10 can be said to have a first face 18 and a second face (not shown) opposite the first face 18, each of the first and second faces making up the majority of the surface area of the sheet of composite material 10.

With reference to Figure 2b, score lines 12a, 12b are shown to illustrate the scoring of the first face 18 of the composite material 10. These score lines 12a, 12b represent scores made in the surface of the composite material 10 for the purposes of weakening the material, so as to make the material easier to bend. There may be any number of score lines 12a, 12b in the surface of the composite material so as to achieve this, depending on the extent to which it is desirable to improve the flexibility of the material - less flexible composite material 10 might provoke more score lines 12a, 12b being scored into the surface so as to suitably improve the flexibility of the composite material 10.

The aim of the score lines 12a, 12b is to make recycling the composite material 10 easier. Improving the flexibility of the material enables it to better conform to other pieces of recycled material, as well as the shape of the eventual mould it is to be pressed into. To that end the score lines 12a, 12b, are notches or trenches in the surface of the composite material 10 that may be created in any appropriate way. For example, a knife, chisel, CNC machine, press or rotary tool might be used to score the surface of the composite material 10.

A cross section of the scored composite material 10 along the line A-A is shown in Figure 2c. The score lines 12a, 12b can be seen as notches or troughs in the surface of the material, leaving ridges 14a, 14b of material between them. Preferably, the notches 12a, 12b are sized so that they can receive the ridges 14a, 14b of another similarly prepared piece of composite material 10' shown in dotted lines. Accordingly the two pieces of material are able to interlock in use, which may improve the strength and/or compactness of any eventual part made using the recycled material.

As can be seen in Figure 2c, in addition to score lines 12a, 12b on the first face 18 of the composite material 10, there may also be score lines on the opposite side of the material or on another face of the material. These can further improve the flexibility of the material, enabling it to bend more readily in different directions.

The score lines 12a, 12b are larger than the ridges 14a, 14b. In embodiments, they may be slightly larger so as to just fit the ridges 14a, 14b. In other embodiments they may be substantially wider than the ridges 14a, 14b so as to more readily interlock, for example twice the width or more. In other embodiments, they may be substantially the same size or even slightly smaller. Such sizes might be particularly suitable where the processed parts have a degree of flexibility and/or are able to stretch such that the score lines 12a, 12b may still interlock with ridges 14a, 14b. In other embodiments the score lines 12a, 12b may be substantially narrower than the ridges 14a, 14b and exist only to increase the flexibility of the material and not serve to interlock.

If the composite material 10 has a particular direction along which a large subset of the reinforcing fibres are aligned, it may be desirable to align the score lines 12a, 12b substantially perpendicular to the direction of the reinforcing fibres. Particularly if the score lines 12a, 12b are deep enough to cut though some reinforcing fibres this may further increase the flexibility of the processed material.

Alternatively, where the composite material 10 has one axis or direction along which it is significantly longer than the other directions, the score lines 12a, 12b may be substantially parallel with that direction. This might be desirable to minimise the number of score lines 12a, 12b that need to be scored into the composite material 10, which can be a time consuming task.

With reference now to Figure 2d, cut lines 16a, 16b are shown to illustrate how the composite material may be cut into strips 20a, 20b once it has been scored. The cut lines 16a, 16b are in a different direction to the score lines 14a, 14b. Preferably, these lines are substantially perpendicular, so that the resulting strips 20a, 20b are more effectively weakened and rendered flexible by the score lines 14a, 14b... However the cut lines 16a, 16b may be at any angle to the score lines 14a, 14b, although preferably not parallel. For example, they may be within 45 degrees of perpendicular, within 30 degrees, or within 10 degrees. The composite material may be cut in any appropriate manner, for example with a blade, saw or even scissors.

With reference now to Figure 2e, the cut strips 20a, 20b are shown, with score lines 14a, 14b still visible on their surfaces. Depending on the size of the composite material 10 and the intended application of the strips 20 it may be desirable to further cut the strips 20 to reduce their overall length. For example, it has been found that a particularly desirable size for the strips 20 is 3mm long by 1mm wide. In embodiments the strips may be cut to longer lengths, for example 5mm, 10 mm or even 25mm long. The width of the strips may be maintained at 1mm, or in embodiments may be increased with the length of the strips.

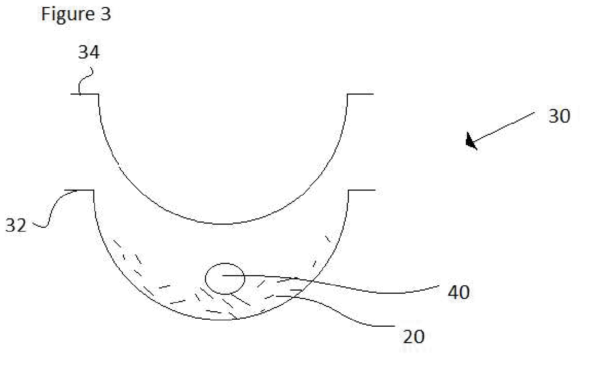

Once the strips 20 have been prepared, they may be used to make a new composite part, taking the place of the reinforcement of the part since they already contain a significant amount of fibre reinforcements. With reference to Figure 3, an example way of using the strips 20 is shown, using a two-part mould 30. The strips 20 are placed inside a first part 32 of the two-part mould 30, and an appropriate resin 40 is added. The second part 34 of the two-part mould 30 is added, and the first and second parts 32, 34 are compressed together in order to compress the strips 20 and resin 40, squeezing out any air bubbles or gaps in the assembly. The resin 40 is then cured to result in a new composite part, akin to a forged composite part that may comprise short strands of reinforcement, aligned in various directions, with matrix around them.

In an embodiment, the resin used may be a thermoset or epoxy resin, similar to the resin that made up the matrix of the earlier composite material 10. The compression and curing may be achieved by using a conventional vacuum bag system and autoclave, for example. Alternatively a room temperature curing resin might be used, with or without a vacuum bag. Absent a vacuum bag compression may be supplied for example by bolts that connect the first and second part 32, 34 of the two part mould 30.

In an embodiment, the earlier composite material 10 may have comprised a thermoplastic material. In such a case, compressing and heating the strips 20 in the two part mould 30 may be sufficient to melt the extant matrix material around the strips 20 and form a new composite part. Optionally, additional plastic or resin may be added. This may be desirable as the matrix of forged composite parts generally represents a larger proportion of the material.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

Although the scoring step has been described as taking place before the cutting step, it is possible that in some embodiments it might be desirable to cut the composite material 10 into strips 20 then score the resulting strips 20.

In some embodiments, strips 20 of a variety of different sizes and even different notch 12/ridge 14 sizes may be used in combination with each other. The selection of what strips 20 are appropriate may depend on the desired strength for the resulting composite part. Furthermore strips 20 comprising different types of reinforcement and/or matrix material may be combined in some cases - for example prep-impregnated woven sheets and resin infused unidirectional fibres could be combined.

The selection of an appropriate resin and mould for creating a new composite part from the strips 20 is not particularly important to the present disclosure and the skilled person will be aware of various options. In embodiments, the resin 40 selected may be different to or the same as the matrix present in the original composite material. A single part mould 30 in combination with a vacuum bag process may be appropriate in some cases.

In embodiments, the process described above could be used on larger pieces of composite material 10 that are not a substantially flat sheet. In such a case it may be desirable to score more surfaces of the material, or successively score and then cut some of the material away, for example by controlled delamination of the part.

The above embodiments are to be understood as illustrative examples of the invention. Equivalents and modifications not described above may also be employed without departing from the scope of the invention, which is defined in the accompanying claims.

It is to be understood that any feature described in relation to any one embodiment may be used alone, or in combination with other features described, and may also be used in combination with one or more features of any other of the embodiments, or any combination of any other of the embodiments.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

It should be noted that throughout this specification, "or" should be interpreted as "and/or".

Although the invention has been described above mainly in the context of a fixed-wing aircraft application, it may also be advantageously applied to various other applications, including but not limited to applications on vehicles such as helicopters, drones, trains, automobiles and spacecraft.

## Claims

1. A method of processing a piece of composite material for recycling, the composite material comprising a reinforcement and a matrix, the method comprising:
Scoring a first face of the material in a first direction to create a series of substantially parallel notches and ridges in the first face of the material, such that it is weakened and easier to bend; and
cutting the material in a second direction such that strips of weakened composite material are formed.

2. A method according to claim 1, wherein the first direction is substantially perpendicular to the second direction.

3. A method according to any preceding claim, wherein the step of scoring the material further comprises scoring a second face of the material in the first direction.

4. A method according to any preceding claim, wherein the notches formed by the step of scoring the material have a width that is larger than ridges formed by the same step.

5. A method according to any preceding claim, wherein the first direction is substantially perpendicular to the direction of the majority of fibres in the composite material.

6. A method according to any one of claims 1 to 4, wherein the first direction is substantially aligned with the longest direction of the piece of composite material.

7. A method according to any preceding claim, further comprising a step of cutting the strips to form shorter strips.

8. A method according to claim 7, wherein the strips are cut such that they are approximately 3mm long in the second direction and 1mm wide.

9. A method according to any preceding claim, further comprising a step of using the strips of composite material to make a new composite part.

10. A method according to claim 9, wherein the step of using the strips of composite material comprises:
providing a mould;
placing the strips of composite material into the mould;
providing a resin;
adding the resin to the mould;
compressing the resin and strips of composite material in the mould; and
curing the resin so as to form the new composite part.

11. A method according to claim 10, wherein:
the resin is provided by the matrix of the strips of composite material;
the method further comprises heating the strips of composite material to melt the resin; and
the step of curing the resin comprises allowing the resin to cool.

12. A method according to any one of claims 10 or 11, further comprising the steps of:
providing reinforcing fibres; and
placing the reinforcing fibres in the mould prior to curing the resin.

13. A composite part, comprising a matrix and a reinforcement, wherein at least a portion of the reinforcement comprises strips of weakened composite material obtained by any one of claims 1 to 8.

14. A recycled composite part obtained by any one of claims 9 to 12.
